# EUROPEAN PATENT SPECIFICATION

(11) **EP 1 482 702 B1**
(45) Date of publication and mention of the grant of the patent: **27.06.2007**
(21) Application number: 03253403.4
(22) Date of filing: 30.05.2003
(51) Int. Cl.: H04L 29/06

(54) **System and methods for provisioning a service for a communication device**
System und Verfahren zur Dienstbereitsstellung für ein Kommunikationsgerät
Système et procédé pour la fourniture de services à un appareil de communication

(43) Date of publication of application: 01.12.2004
(73) Proprietor: Research In Motion Limited, Waterloo, Ontario N2L 3W8 (CA)
(72) Inventor: Kruis, David P., Waterloo, Ontario N2T 1A6 (CA); Gilhuly, Barry J., Waterloo, Ontario N2K 3P8 (CA); Smith, Christopher D., Burlington, Ontario L7R 2P3 (CA)
(74) Representative: Hibbert, Juliet Jane Grace

(56) References cited:
- WO-A-01/65873
- WO-A-01/77842
- WO-A-99/65256
- WO-A-02/084975
- WO-A-03/024139

## Description

### Field of the Invention

This invention relates to mobile communications. More particularly, the invention relates to a system and methods for provisioning services for a communication device.

### Background of the Invention

Computer based services, such as electronic mail (e-mail), have increasingly allowed their users to communicate with others in more flexible ways and at more flexible times. Advanced mobile communication devices now permit users to access such services through mobile handheld devices. Typically, this is done by provisioning an associated service for the mobile device. The associated service connects to the primary service (i.e. the e-mail service) and allows the user to access the primary service at the device using the associated service. For example, the associated service might be a redirection service that obtains data from the primary service and transmits it to the device, allowing the user to access the data at the device.

Provisioning the associated service can be a complex and lengthy procedure, requiring the user to contact the service provider of the associated service through an Internet based portal, by automated telephone system or by voice telephone, to obtain the service provider's assistance to configure the associated service before it can be accessed through the mobile device.

Some users may have multiple services that they wish to access through the mobile device. For example, some users may wish to access multiple e-mail accounts, calendar services (for tracking appointments and activities), contact information and other types of data services, all or some of which may be provided by different service providers.

Published PCT application WO 03/024139 A2 relates to a system and method for real time self-provisioning for a mobile communication device. A provisioning request including provisioning information and specifying a provisioning operation and a first communication service is prepared on the mobile communication device and sent to a provisioning system. Processing of the provisioning request is dependent upon whether or not a second communication service has been activated for the mobile communication device. If the mobile communication device is outside a coverage area of a wireless communication network when a provisioning request is prepared, the request is stored at the mobile communication device and sent to the provisioning system when the mobile communication device enters the coverage area. The provisioning system preferably manages service provisioning for multiple services, any of which may be hosted by different service providers.

Published PCT application WO 02/084975 A2 relates to an advanced system and method for dynamically discovering, provisioning and accessing host services on wireless data communication devices. A system and method for pushing a service book to a mobile device is disclosed. A service book includes a plurality of fields relating to a host service. At least one mobile device is identified that is to receive the service book. Wireless propagation information is provided that identifies an address for the mobile device to receive the service book. The service book is transmitted over a wireless network using the address for the mobile device, and is received by the mobile device.

While the prior art proposals do provide for provisioning, they do require positive action on the part of the user to effect provisioning, either by invoking a provisioning application or by accepting a service sent to the device being provisioned.

It is desirable to provide an improved system and methods for provisioning an associated service for a mobile device and to associate the associated service with a primary service and other services through the mobile device.

### Summary of the Invention

In accordance with the present invention there is provided a method of provisioning an associated service for a mobile device comprising the steps of:
transmitting a registration request to register a user for said associated service to a registration server;
receiving a service book from a provisioning server in response to said registration request, wherein said service book allows information relating to said associated service to be collected at said mobile device and transmitted to said provisioning server;
allowing said user to input information using the service book, wherein said information input by said user comprises a user ID and a password;
transmitting said information input by said user to said provisioning server, wherein said provisioning server creates an associated service account using said user ID and said password, and wherein said mobile device subsequently obtains said associated service using said associated service account characterized in that;
said registration request is transmitted to said registration server automatically upon activation of a communication system of said mobile device; and
said service book becomes active automatically upon receipt of said service book at said mobile device, such that user acceptance of said service book at said mobile device is not required to activate said service book.

### Brief Description of the Drawings

In the drawings:
Figure 1 is a block diagram of a system that may be used to implement an embodiment of the present invention;
Figure 2 is a block diagram of a mobile communication device that may be used with the embodiment of Figure 1;
Figures 3a, 3b and 3c are a flowchart illustrating a method according to an embodiment of the present invention; and
Figure 4 is a block diagram of a second system that may be used to implement an embodiment of the present invention.

### Detailed Description of Exemplary Embodiments

The present invention provides an improved system and methods for provisioning services for a mobile communication device.

In one aspect, the invention provides a system and method for provisioning an associated service for a mobile communication device. Typically, although not necessarily, the device is a wireless communication device. The associated service is used to provide access to information or data relating to a primary service using the device. For example, the primary service may be an e-mail service that provides a user with an e-mail account for receiving and transmitting e-mail messages and the associated service may be a redirection service that redirects data from the primary service to the device and also directs data from the device to the primary service.

During or after the manufacturing, the device is configured to operate on one or more networks. The networks may include wireless components and the device may have a wireless or wired communication system, or it may have both wireless and wired communication systems. In some embodiments, the device is configured to operate on a wireless network that permits access to a wire-based network such as the Internet.

An address of a registration server is stored in the device after it is manufactured. This may be done by the provider of the associated service (the "associated service provider"), by an operator of a wireless network that the device is compatible with or by another entity. Typically, the address of the registration server will be designated by the provider of the associated service.

Eventually the device is delivered to a user. The user may obtain the device from the associated service provider, the wireless network operator, or from a reseller who sells the device on behalf of one of these entities. The user may also obtain the device from others, and the manner in which the user obtains the device is not part of this invention and does not limit it.

After obtaining the device, the user enables the communication system of the device. The communication system detects the presence of at least one of the networks and uses the stored address of the registration server to send a registration request to the registration server. The registration server, in conjunction with a provisioning server determines whether the device may be provisioned with the associated service using the present method. If the associated service has been provisioned for the device before, or if the device has been designated not to be provisioned with the associated service, or if the device has been designated to be provisioned with the associated service by an alternate method, the registration request is denied. If the registration request is approved, the device is provided with a service book that contains data and instructions that enable the device to provision the associated service.

The device is typically capable of using various data display and data collection protocols. In one embodiment, the device is capable of displaying pages in WML and HTML on a display screen, using an application installed on the device. The pages can include forms with dialogs allowing the device's user to enter data into the form using an input device.

The service book delivered to the device is compatible with the device's capabilities for displaying and collecting data. The service book may be an application that is executable on the device. In other embodiments, the service book contains a series of WML and HTML pages that display information for the user and allow the user to provide data using a browser application installed on the device. The pages contains links that transmit the entered data to a provisioning server during the method of the present invention. The provisioning server is capable of provisioning the associated service for the device. In another embodiment, the service book may simply be an address of the provisioning server that can provision the associated service. The server contains pages that can be displayed on the device to display information and collect data as described above.

The service book is configured to become active on receipt at the device, for example, by starting to execute or by displaying pages using a browser on the device. If the service book provides an address of a server, a browser application on the device is used to display pages located on the server.

The service book, or the server specified by the service book, allows the user to specify a user ID and password for the associated service. If the user has already obtained the primary service prior to provisioning the associated service, the user is permitted to enter details relating to the primary service. Alternatively, the user may provision the primary service in conjunction with the associated service. In this case, the user may or may not be given the opportunity to specify a separate username and password for the primary service.

The device transmits the user ID and password and the details relating to the existing or newly requested primary service to the provisioning server.

If required, the provisioning server attempts to create a new primary service account for the user. This primary service account may be provided by a primary service provider system, which is operated by a primary service provider, which may or may not be the same entity that provides the associated service.

If the primary service is successfully provisioned, or if the user had provisioned the primary service previously, the provisioning server creates an associated service account for the device on an associated service provider system.

In some embodiments, the associated service and primary service may be integrated. The associated service provider may also provide the primary service and may create a single account for the user that includes both the associated service and the primary service. The primary service may be available to the user through various means, such as an Internet or WWW portal. The associated service allows the user to access the primary service at the device by directing information from the primary service to the device. For example, the primary service in such an integrated embodiment may be an e-mail service that is accessible from any Internet browser. A copy of incoming e-mails to the e-mail service is transmitted to the device by the associated service.

Once the associated service, and if necessary, the primary service, have been provisioned, the provisioning server configures the primary service or the associated service, or both. In one embodiment, the primary service provider system is configured to forward a copy of information received by the primary service to the associated service. The associated service provider system redirects this data to the device, allowing the user to review the information originally transmitted to the primary service. In another embodiment, the associated service provider system is configured to periodically poll the primary service to determine if any new information has been received. If so, the associated service provider system obtains a copy of this information and transmits it to the device.

The associated service provider system is also configured to receive information from the device and forwards it to the primary service, allowing the user to access the primary service from the device.

In some embodiments of the present invention, the user may specify one or more additional services to the associated with the associated service. The provisioning server similarly configures the associated service or additional services, or both, to allow the user to access them through the device.

In some embodiments, particularly in those embodiments where at least some of the primary and additional services are e-mail services, the device permits the user to identify one of the primary or additional services as a "Sent From Address". Subsequently, this service is used as the default outgoing service for outgoing data from the device.

In one embodiment, the primary and additional services are e-mail services provided by the same or different e-mail service providers. The associated service integrates the various e-mail services together so that e-mails received by any of the primary or additional services are available to the user at the device. The user is able to transmit e-mails through any one of the e-mail services, and may specify one of the services as a default service.

The present invention provides a simplified system for provisioning the associated service. The user is able to do so by simply activating the communication system of the device, entering a userID and password for the associated service and the username and passwords for the primary service and any additional services. The user need not use another communication system, such as an Internet, WWW or WAP portal to provision the service.

Several embodiments of the present invention will now be described in greater detail with reference to the Figures.

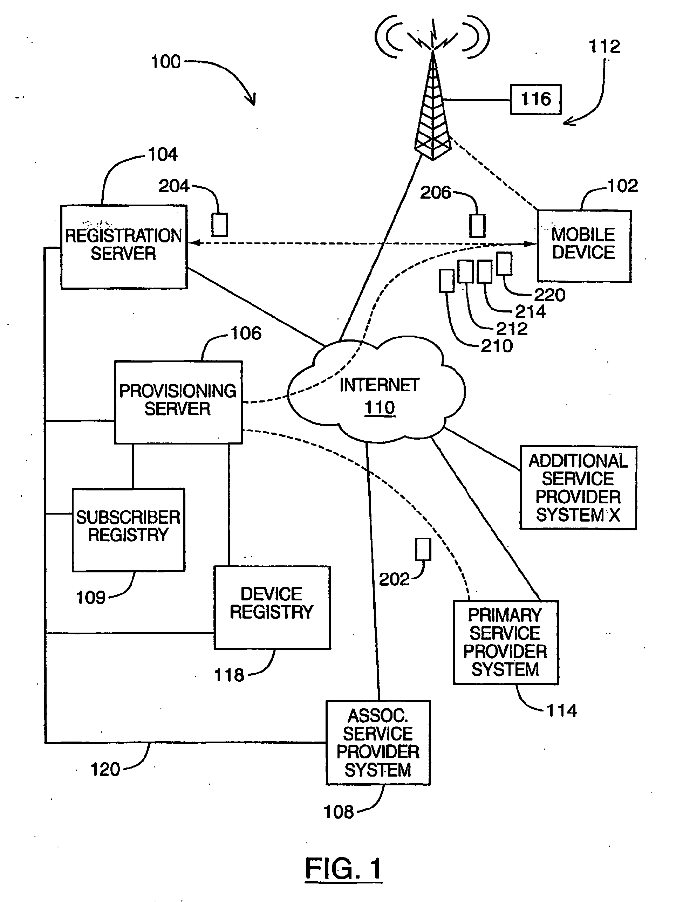

Reference is first made to Figure 1, which illustrates a system 100 for provisioning an associated service for a mobile communication device 102 and for associating the associated service with a primary service and with other services.

System 100 includes a registration server 104, a provisioning server 106, an associated service provider system 108, a subscriber registry 109 and a device registry 118. System 100 is typically operated by a service provider A, which may provide the associated service itself or which may provision the associated service for device 102 on behalf of another service provider (not shown) that provides the associated service. In the present exemplary embodiment, service provider A provides the associated service.

System 100 communicates with device 102 across a network 110, such as the Internet or a local area or wide area network (LAN or WAN). Typically, although not necessarily, device 102 is a wireless communication device capable of communicating with network 110 using a wireless communication network 112, which typically will be operated by a network operator 116.

In this exemplary embodiment, device 102 is operated by a user who is a subscriber of services provided by network operator 116.

In the present exemplary embodiment, the associated service is associated with a primary service, which is provided by a service provider B. In the present exemplary embodiment, the network operator 116 is also service provider B, although the network operator 116 may be a distinct entity from service provider B.

Network operator 116 / Service provider B maintains a primary service provider system 114 for recording information relating to users that obtain device 102 and/or the primary service from service provider B. In embodiments where the network operator 116 and service provider B are distinct entities, each of them may maintain separate systems to record information relating to the user and the specific equipment (such as device 102) and services (such as the primary service) that each of them provides to the user.

The components of system 100 may communicate with one another through network 110 or through another network 120. Furthermore, one or more components of system 100 may operate on a single computer system or may be integrated into a single server. For example, registration server 104 and provisioning server 106 may be integrated together or they may operate concurrently on a single computer system. In other embodiments of the present invention, registration server 104 or provisioning server 106 or both may consist of multiple processes operating on two or more computers.

Subscriber registry 109 is used by system 100 to track the status of subscribers, who are users of various devices that have subscribed to network access services offered by network operator 116.

Typically, additional wireless network operators (not shown), like network operator 116, will provide network access services allowing mobile devices to connect to network 110 and to system 100. This is further described below. Each of these network operators may provide devices to subscribers of their services. Subscriber registry 109 is used to track the status of all such subscribers and the record for each subscriber in subscriber registry 109 may include the identity of the specific network operator who provides network access services to the subscriber.

In the present embodiment, subscriber registry 109 has a record for each subscriber that is known to system 100. This may include subscribers of services provided by network operator 116 (and other network operators) who have not yet provisioned the associated service for use on their mobile devices in addition to subscribers who have provisioned the associated service for use on their mobile devices. The status of a subscriber in subscriber registry 109 may one or more of the following:

| **Status** | **Meaning** |
|---|---|
| Associated service provisioned for subscriber | The subscriber has provisioned the associated service his or her mobile device. |
| Associated service cannot or will not be provisioned for subscriber through the method of this invention | The subscriber is not permitted to use the provisioning method of the present invention. It may be possible to provision the service using a different method. |
| Subscriber known - associated service not provisioned | The network operator has reported that the subscriber has subscribed to services from the network operator, but the subscriber has not yet provisioned the service for use on his or her mobile device. |
| Subscriber Suspended | The subscriber device has been suspended or blocked. This may be done because the subscriber has failed to pay fees to the network operator or for other reasons. |

These status descriptions are only exemplary and additional status categories may be used to describe the status of a subscriber. In addition, the record for each subscriber may contain additional information related to the services that a subscriber has subscribed to.

Device registry 118 is used by system 100 to track the status of mobile communication devices, such as device 102. All devices for which system 100 has provisioned the associated service have a record in device registry 118. In addition, the device registry 118 may contain records for devices that are capable of having the associated service provisioned for them. Subscriber registry 118 may also contain records for devices for which the associated service cannot or will not be provisioned through the method of this invention. The status of a device may be one or more of the following:

| **Status** | **Meaning** |
|---|---|
| Associated service provisioned for device | The associated service has already been provisioned for the device. |
| Associated service cannot or will not be provisioned through the method of this invention | The device is not permitted to use the provisioning method of the present invention. It may be possible to provision the service using a different method. |
| Device activated - associated service not provisioned | The device is known to have been activated, but the associated service has not been provisioned for it. This status may be used for a device that has been reported as activated by a network operator. |
| Device known but not activated | The device is known to exist (i.e. the identification code of the device has been assigned to it), but the device has not been activated. |
| Suspended | The device has been suspended or blocked. This may be done because the device has been reported lost or stolen. |

These status descriptions are only exemplary and additional status categories may be used to describe the status of a device. In some embodiments of the present invention, some of these status descriptions may not be used. In addition, the record for each device may contain additional information related to the device's capabilities, other services provisioned by service provider A or other service providers, etc. The status of a device in device registry 118 may be set based on advice from network operator 116. For example, the network operator 118 may advise when it has delivered a device to a user, or when a user has reported a device lost or stolen, or when a device should be suspended because the user has failed to pay required fees, etc.

Typically, although not necessarily, a user will obtain device 102 from the network operator 116 in conjunction with subscribing to services offered by the network operator 116. The user will normally subscribe to wireless network access services, allowing the user to communicate through network 112 with network 100.

Alternatively, the user may obtain the device 102 from another entity such as service provider A or service provider B. In this case, the user will subscribe to network access services from the network operator 116 (or another network operator), allowing the user to access network 110. The network services subscribed to by the user need not be wireless network access services, but may be any type of network access services, provided device 102 is able to communicate with system 110.

Returning to the present example, the user obtains the primary service from service provider B, and will enter an arrangement with service provider B relating to the primary service.

The user obtains device 102 and subscribes to wireless network access services from network operator 116. The user obtains e-mail service, which is the primary service, from service provider B. As noted above, network operator 116 and service provider B are the same entity, in this exemplary embodiment.

During manufacturing, device 102 is configured to operate with one or more types of communication networks. For example, network 112 may be a GPRS network which provides "always-on" communication capabilities for mobile devices such as device 102. Device 102 will contain a radio antenna and associated circuitry required to detect the presence of the network 112 and to communicate with other components in the network. Device 102 may also be configured to operate with other types of types of networks, such as other GSM networks or CDMA networks. During or after manufacture, device 102 will typically also be configured with an identification code such as electronic serial number (ESN) or an International Mobile Equipment Identifier (IMEI) that is typically used for wireless communication devices in GSM networks (such as a GPRS network).

In some embodiments, after device 102 has been manufactured, a record may be created for it subscriber registry 118. If a record is created, the status of device 102 will be set to "Device known but not activated". In the present exemplary embodiment, this is not typically done and a record for the device is not created in the device registry until the device is activated.

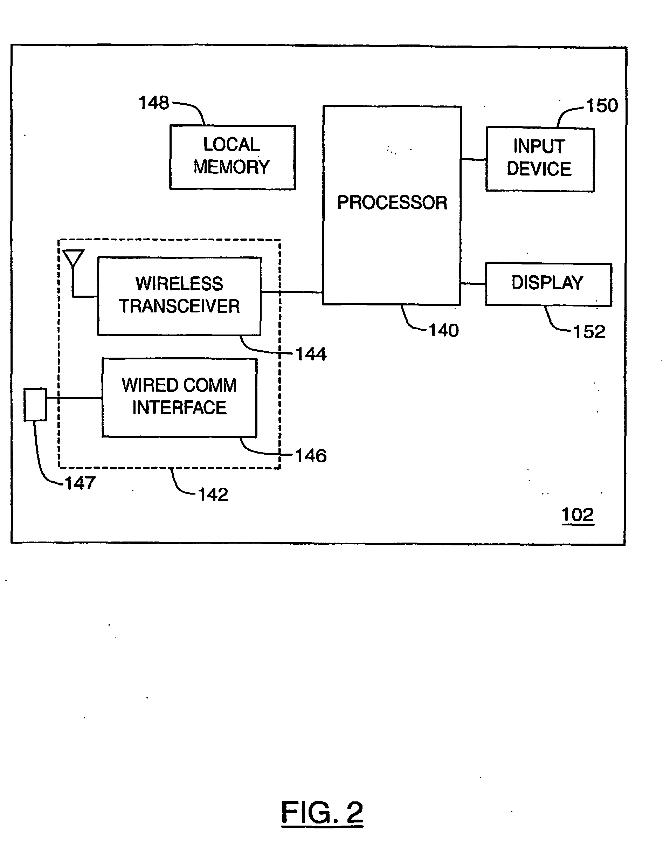

Reference is next made to Figure 2, which is a block diagram of device 102. Device 102 is controlled by a processor 140, which is used to execute various programs that provide the functions described above and other functions. Device 102 has a communication system 142, which includes a wireless transceiver system 144 and may optionally include a wired communication interface 146. Wireless transceiver system 144 allows device 102 to communicate with wireless network 112. Wired communication interface 146 may include, for example, an Ethernet port 147 than allows device 102 to be coupled to network 110 directly or through an intermediate network (not shown). The communication system 142 is at least capable of data communication with network 110. Communication system 142 may also be capable of voice communication, although device 102 is not required to have this capability to utilize the present invention.

Device 102 has a local memory 148 in which data and programs may be stored. In accordance with the present invention, service books containing various data or programs, which may in the form of executable programs, scripts or other types of instructions executable on the processor 140, pages that may be displayed on the device, or which may provide an address of a server at which pages are stored, are transmitted to device 102. These service books will be stored in local memory 148 and may be read and executed by processor 140 from this local memory.

Local memory 148 may consist of fixed and removable memory devices. For example, a removable subscriber information module (SIM) may be used to store information about the user of device 102. The SIM may be provided to subscribers of the network access services provided by network operator 116, and the subscriber (who is the user of device 102) may insert the SIM into a port on his or her device. The SIM may be used to store personal identification information about the subscriber, details about the services that the subscriber has subscribed to, and may identify the specific network operator that has provided network access services to the subscriber. This information may alternately be stored in fixed memory devices in device 102 (such as static RAM modules).

Device 102 also has a user input device 150, which will typically be a keypad or a keyboard. Device 102 may be a cellular telephone, which will typically have a numeric keypad that may be used to enter alphanumeric data. Device 102 may be a multi-purpose communication device intended to allow its user to access electronic mail, calendar, contact management and other services. Such a communication device may have an alphanumeric keyboard. A simpler device may have an input device consisting of just a few keys that may be used to enter alphanumeric or at least alphabetic data. Device 102 may have a port (not shown) allowing an external input device to be coupled to it.

Device 102 also has a display 152 on which it displays information to the user and on which it allows the user to view any input data he or she has entered using by using input device. Device 102 may have a port (not shown) allows an external display device to be coupled to it.

Device 102 may optionally be configured to operate with one or more standardized content languages such as WML or HTML , to allow standardized pages of data and forms to be transmitted to it and to be displayed on display 152. This may be done by installing an appropriate browser application on device 102. The service books transmitted to device 102 may include pages formatted in a content language for which device 102 is configured. Alternatively, the service book may identify the address of a server where such pages are available.

Device 102 may have other systems and sub-systems to provide additional functionality that is not directly required for the present invention, but is required or desirable to provide the functions for which device 102 is designed. Devices used with system 100 in accordance with the present invention need not be identical. For example, device 102 may be a multi-purpose communication device and other devices used by other users of system 100 may be cellular telephones. A skilled person will understand the design, construction and operation of devices that are suitable for use with the present invention.

In one embodiment, the device 102 is a GSM- and/ or GPRS-compatible mobile station comprising the physical equipment used by a subscriber to gain access to telecommunications services. Functionally, it includes a mobile termination and, depending on the services it can support, various terminal equipment, and combinations of terminal equipment and terminal adapter functions. Such a mobile station has a number of identities, including an IMEI, as described above, and when used by a subscriber, an International Mobile Subscriber Identity (IMSI) embodied in the subscriber's SIM.

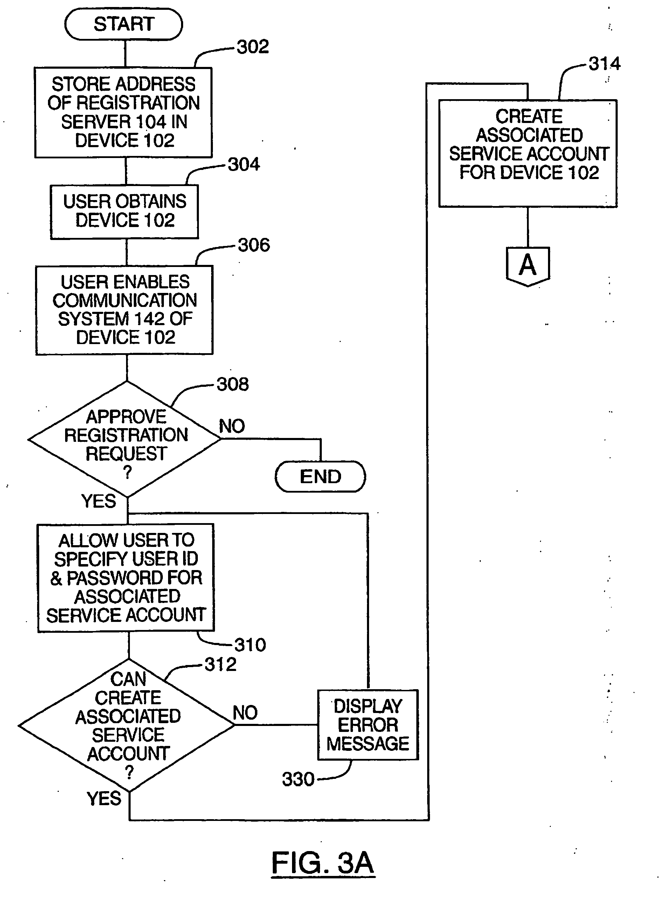

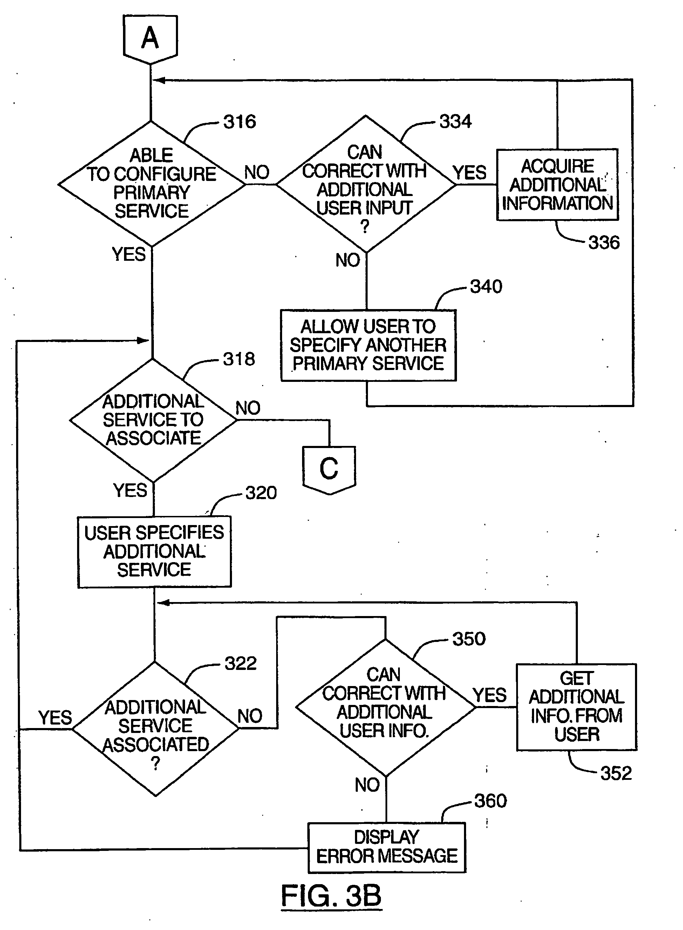

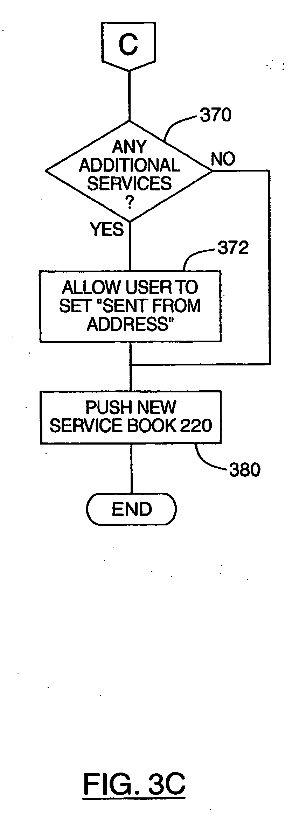

Reference is next made to Figure 3, which illustrates a method 300 for provisioning the associated service for device 102. Method 300 begins in step 302, in which a registration server address, which may be used to send information to registration server 104 across network 110, is stored in device 102 by service provider A, the network operator 116 or service provider B. The registration service address may also be stored in device 102 by the manufacturer of device 102, typically in accordance with instructions received from service provider A. Service provider A will typically specify the registration server address, regardless of which entity stores the registration server address in device 102. Device 102 will subsequently be able to communicate with the registration server 104 using the stored address. Depending on the type of address stored in it, device 102 may need to use additional services available to it, such as a domain name server that is part of network 110, to communicate with registration server 104.

Method 300 next proceeds to step 304, in which the user obtains device 102 by purchasing (or otherwise obtaining) it from the network operator 116 (who, in this exemplary embodiment, is also service provider B). In conjunction with obtaining device 102, the user subscribes the network access services from network operator 116, and becomes a subscriber, allowing device 102 to communicate with network 110 through wireless network 112. In the present exemplary embodiment, the user obtains electronic mail (e-mail) service from service provider B, allowing the user to send and receive e-mails using an assigned e-mail address. For example, the user may obtain e-mail service at the e-mail address user@servprovB.com.

The user may obtain device 102 and the primary service at the same time, or may obtain them in separate transactions. If network operator 116 and service provider B are separate entities, the user may have to obtain device 102 and the primary service in separate transactions from the two entities. Alternatively, separate network operator 116 and service provider B entities may cooperate to allow one of them to provide both device 102 and the primary service to the user in a single transaction, and to allow the user to subscribe to network access services from network operator 116.

Network operator 116 records the transfer of device 102 to the user, and the user's subscription to the network access services in service provider system 114. Typically, network operator 116 will also record personal and billing information relating to the user, the identification code of device 102 and service standards relating to the network access services and primary service for the user. For example, the service standards may relate to time periods (hours of the day, days of the week, etc.) at which network access services and primary service will be available to the user, limits on data rates or total data volumes that will be transmitted to the user, a maximum data size for all e-mail messages saved in the user's e-mail inbox or other characteristics and conditions of the primary service.

Some mobile devices may be configured (and permitted) to be provisioned the associated service using a method other than the method of the present invention. In addition, some mobile devices may not be configured or may not be permitted to be provisioned the associated service at all. This configuration or permission may be determined prior to or in conjunction with a user obtaining the device. Device 102 is capable of being and is permitted to be provisioned with the associated service using the present method.

Network operator 116 may optionally transmit some or all of this information to provisioning server 106. In particular, since device 102 is configured and permitted to be provisioned with the associated service by service provider A, then network operator 116 may transmit a Subscriber Activation Message 202 to provisioning server 106 indicating that user 102 has become a subscriber of network access services in relation to network 112. Subscriber Activation Message 202 may also include details relating to the user such as the user's identification and billing information and details relating to the primary service. In the present example, the user's primary service is e-mail service at the e-mail address user@servprovB.com. The Subscriber Activation Message 202 may include this e-mail address.

The Subscriber Activation Message 202 may also indicate that device 102 has been activated and may include the identification code of device 102 and may also indicate whether the device 102 is or is not permitted to use the present method to provision the present method.

In response to the Subscriber Activation Message, if it is sent, provisioning server 106 updates the status of user 102 in subscriber registry 109 and the status of device 102 in registry 118. The status of the user of the device 102 may be set to "Subscriber known - associated service not provisioned" and the status of device 102 may be set to "Device activated - associated service not provisioned", or to other status settings depending on the advice from the network operator 116. In both cases, provisioning server 106 may create a new record in the registry 109 or 118, if a record for the user or device does not exist.

In other embodiments of the invention, network operator 116 may also transmit a message to provisioning server 106 when it provides a device that is not configured or not permitted to use the present method to a user, indicating the identification code of the device and indicating that the device cannot use the present method. In response to such a Device Activation Message, the provisioning server 106 may set the status of device 102 in registry "Associated service cannot be provisioned through the method of this invention".

The term "activation" is used in relation to a wireless communication device to describe the act and process of registering the device with one or more wireless networks with which the device will be used. Device 102 is activated on network 112 prior to or in conjunction with step 304. The present invention is not limited by and does not include the step of initially activating device 102.

Method 300 next proceeds to step 306, in which the user enables the communication system 142 of device 102. The method of enabling the communication system of device 102 may vary. Device 102 may be configured to operate its communication system whenever it is powered up. In this case, the user may turn on device 102. Device 102 may be configured to allow its communication system to be disabled even though the device is powered up. In this case, the user may re-enable the communication system in this step.

When its communication system is activated, device 102 detects the presence of network 112 and transmits a Registration Request Message 204 (Figure 1) to registration server 104 using the registration server address recorded in step 302. The Registration Request Message 204 includes the identification code of device 102, the identity of the user, and the identity of the network operator 116. If network 112 is not available when the communication system is activated, device 102 will typically indicate its inability to detect network 112 on its display 152 and will periodically attempt to detect the presence of network 112.

Method 300 next proceeds to step 308, in which registration server 104 receives Registration Request Message 204 and attempts to authenticate it. Registration server 104 extracts the information in Registration Request Message 204 and transmits it to provisioning server 106. Provisioning server 106 determines whether the user is permitted to provision the associated service using this method for his device 102, and whether device 102 is permitted to provision the associated service according to the method of the present invention.

Provisioning server 106 may check the status of the user in subscriber registry 109 to determine if the associated service can be provisioned by the user. For example, if in step 304, network operator 116 transmitted a Subscriber Activation Message 202 (Figure 1) to provisioning server 106 identifying the user as a user for which the present method may validly be performed, then the status of device 102 will be "Subscriber known - associated service not provisioned".

If subscriber registry109 indicates that the associated service has already been provisioned for the user, then the registration request is denied.
Provisioning server 106 may instruct registration server 104 to send a message indicating that the associated was previously provisioned. Alternatively, the provisioning server may do nothing.

Similarly, provisioning server 106 checks the status of device 102 in device registry 109. The registration request may be denied for various reasons relating to the status of device 102. For example, device 102 may be identified in registry 118 as blocked or suspended because it is not operating properly, the device has been reported lost or stolen, etc. A registration request may be denied because the identification code of device 102 is not valid.

If provisioning server 106 is unable to determine whether to approve the registration request based on the status of the user or the device 102 in the subscriber registry109 and/or the device registry 118 (possibly because there is no record for the subscriber or device 102 in the registries) then provisioning server 106 may take one of several courses of action. The present invention allows network operator 116 to specify how their subscribers are treated if they attempt to provision the associated service before the provisioning server has enough information to allow a registration request. The network operator may specify that (i) the subscriber's request is to be allowed as if subscriber had been previously reported as a valid subscriber of the network operator's services; (ii) the subscriber's request is to be allowed for the time being, and the network operator is to be informed, allowing the network operator to subsequently confirm or deny the validity of the subscriber's request; (iii) the request is to be delayed while the subscriber's status is checked in real time with the network operator or (iv) the request is to be denied. If option (ii) is selected, then method 300 can be completed for the user, but the user and the device 102 or both may subsequently be disabled from using the associated service. If option (iii) is selected, provisioning server 106 requests the status of device 102 from network operator 116. Network operator 116 responds by indicating whether device 102 has been activated, and whether it can be provisioned the associated service using the method of the present invention. If so, then network operator 116 also provides information about the primary service allowing the provisioning server 106 to identify it. In the present example, the network operator 116 would transmit the user's e-mail address for the primary service user@servprovB.com. In another embodiment, where the network operator and service provider B are different entities, network operator 116 may indicate only whether device 102 has been activated and if it should be provisioned the associated service using the method of the present invention. Provisioning server 106 may contact the primary service provider system 114 to obtain information relating to the primary service. Each network operator in system 100 may specify a different policy, and provisioning server 106 will use the policy specified by the specific network operator identified in Registration Request Message 202.

In other embodiments, provisioning server may also attempt to determine if the device 102 is a valid device. This may be done to avoid fraudulent devices from being used to "hack" system 100. For example, the device 102 may be queried with a coded question and required to provide an answer that is not likely to be available to a fraudulent device.

If both the user and the device 102 may be provisioned the associated service, provisioning server 106 approves the registration request. Otherwise, provisioning server 106 denies the registration request. If the registration of device 102 has been denied, method 300 ends.

Optionally, this determination is sent to registration server 104.
Registration server 104 sends a Registration Denied Message 206 (Figure 1) to device 102, which displays a corresponding message on its display 152. In other embodiments, provisioning server may simply do nothing if the registration request is denied, and the request may simply time out at device 102, forcing the user to provision the associated service through an alternative method.

If the registration request has been approved then provisioning server 106 transmits (or "pushes") a service book 210 (Figure 1) (or multiple service books) to device 102. Method 300 then proceeds to step 310.

The service book 210 transmitted to device 102 enables device 102 to collect additional information required to complete the provisioning of the associated service. Service book 210 contains information, programs, scripts or other instructions that may be executed on device 102. As noted above, service book 210 may comprise pages that can be displayed on device 102 or an address of a server where such pages can be accessed. Service book 210 also allows information and forms for the user to complete to be displayed on display 152 during the remainder of method 300. The specific nature of service book 210 depends on the nature of device 102. In the present exemplary embodiment, device 102 includes an enabled browser that is capable of displaying WML and HTML pages. In this embodiment, service book 210 transmitted by provisioning server 106 is an address for a server (which may be the provisioning server, or located in the provisioning server) that has information and forms in WML or HTML format with links that transmit collected information to the provisioning server 106. Provisioning server 106 may be configured to push different service books to different devices, depending on the nature of each device. In addition, multiple service books that operate with different components implemented on a device may be transmitted to the device.

Service book 210 is configured to become active on device 102 automatically after it is received. Starting in step 310, device 102 uses service book 210 to complete method 300.

In step 310, device 102 displays a form that allows the user to create an account for the associated service. Typically, although not necessarily, details relating to the user's primary service will be displayed. In this exemplary embodiment, the user's e-mail address for the primary service, user@servprovB.com, is displayed on the form. The form allows the user to enter a desired user ID and a desired password for the associated service. In addition, the form may optionally permit the user to enter information related to some ancillary features for use with the user's account. For example, the user may be able to specify a nickname or friendly name to be used in conjunction with the associated service account or to configure a mechanism for allowing the user to recover his or her password if he or she forgets it. Various other features may also be provided in conjunction with the user's associated service account.

The form may also allow the user to enter a user name and password for the primary service, if the primary service is password protected by service provider B's system 114.

Device 102 transmits the user ID and password specified by the user for the associated service, along with any information related to ancillary features, and the user name and password for the primary service, to provisioning server 106. Communication between device 102 and the provisioning server in this step and throughout method 300 may be protected by using encryption or other techniques. In one embodiment, transport layer security (TLS) is used.

Method 300 next proceeds to step 312, in which provisioning server 106 determines if an account for the associated service may be created using the user ID and password specified by the user. An account will not be created if the specified user ID already exists, or if the user ID or the password or both do not meet other criteria (such as minimum length, use of mixed alphabetic and numerical characters, exclusion of blocked words or phrases or other formatting requirements). If the account may be created, then method 300 proceeds to step 314. Otherwise, method 300 proceeds to step 330.

In step 330, provisioning server transmits a message to device 102 indicating the reason that the associated service account could not be created. Device 102 displays a corresponding message on its display 152. Method 300 returns to step 310 to allow the user to enter an acceptable user ID and password. Method 300 may limit the number of times that the user is allowed to enter an acceptable user ID and password. If the selected number of attempts is reached, then method 300 may be terminated.

In step 314, provisioning server 106 creates an associated service account for device 102 in the associated service provider system 108.

Method 300 next proceeds to step 316, in which provisioning server 106 transmits a message or otherwise connects with primary service provider system 114 to configure the primary service to operate with the associated service. For example, in the present example, provisioning system 106 may connect with primary service provider system 114 to configure system 114 to forward a copy of all e-mails received at the user's e-mail address user@servprovB.com to the associated service account created in step 314. Associated service provider system 108 is then able to transmit a version of each forwarded e-mail to device 102, allowing the user to access the e-mail.

If provisioning server 106 is unable to configure the primary service to operate with the associated service, method 300 proceeds to step 334.
Otherwise, provisioning server 106 transmits an Associated Service Account Created message 212 (Figure 1) to device 102 indicating that the associated service account has been created and that the primary service has been associated with the associated service and method 300 proceeds to step 318.

In step 334, provisioning server 106 determines the reason that the primary service could not be configured to operate with the associated service. If the primary service could be properly configured by obtaining further information from the user, then method 300 proceeds to step 336. For example, if the user has entered an incorrect user name and/or password for the primary service in step 310, it is preferable to allow the user to correct this information. As another example, if the provisioning server requires additional information about the type of the primary service, then it is preferable to allow the user to provide this information. For example, where the primary service is an e-mail service, it may be necessary to inquire from the user whether the e-mail service is compatible with POP or is some other type of account. If, however, the reason may not be corrected then method 300 proceeds to step 340. For example, the user name and password for the primary service may be correct, but the primary service may not be compatible with the associated service.

In step 336, provisioning server transmits a message to device 102 indicating the reason that the primary service could not be associated with the associated service and requesting corrected or additional information. Device 102 displays a form allowing the information to be entered and transmits this information to provisioning server 106. Method 300 then returns to step 316. Method 300 may limit the number of times that the user is allowed to provide corrected or additional information. If the selected number of attempts is reached, then method 300 may be terminated.

In step 340, provisioning server 106 transmits a message to device 102 indicating the reason that the primary service could not be configured to operate with the associated service and device 102 displays a corresponding message and allows the user to specify a different primary service. Method 300 then returns to step 316 to attempt to configure the different primary service with the associated service. Method 300 may limit the number of times that the user is allowed to specify a different primary service. If the selected number of attempts is reached, then method 300 may be terminated. If method 300 is terminated without configuring any primary service for the associated service, then the associated service account created in step 314 may optionally be deleted or it may be retained. If the account is deleted, the user may optionally be permitted to use method 300 to create an associated service account for his device 102 in the future and associate that account with a primary service. Alternatively, the user may be required to create an associated service account using another mechanism, such as through an Internet or world wide web based portal, by automated telephone system or by telephoning a representative of service provider A. If the account is retained, the user may be able to associate the associated service account with a primary service in the future.

In step 318, device 102 displays a page asking the user whether the user would like to associate the associated service with any other services. For example, in the present example, the user may integrate additional e-mail account services or other services, provided by service provider B, or by another service provider, with the associated service.

If the user wishes to associate additional services with the associated service, method 300 proceeds to step 320. Otherwise, method 300 proceeds to step 370, which is described below.

In step 320, device 102 displays a form allowing the user to specify details relating to the additional service to be associated with the associated service. In the present exemplary embodiment, the user may enter the e-mail address, user name and password for the additional service, which may be provided by service provider B, or by another service provider X (or even by service provider A). In the present example, the additional service is provided by another service provider X, which operates an additional service provider system X to provide the additional service to the user and other persons.

For example, the user may have an e-mail account with the e-mail address jsmith@provider.com. This service is provided through a service provider system at the Internet server mail.provider.com. The e-mail account may have a user name Joe and a password abcd1234. The user enters this information and submits it. Device 102 transmits the information to provisioning server 106.

Method 300 next proceeds to step 322, in which provisioning server 106 attempts to contact the additional service provider system to associate the additional service with the associated service, as described above in relation to the primary service in step 314. If the provisioning server 106 is able to configure the additional service to operate with the associated service, it transmits an Additional Service Associated Message 214 to device 102 indicating that the additional service has been associated with the associated service and method 300 returns to step 318. Otherwise, method 300 proceeds to step 350.

In step 350, provisioning server 106 determines the reason that the additional service could not be configured to operate with the associated service, as described above in relation to the primary service at step 334. If the additional service could be properly configured by obtaining further information from the user, then method 300 proceeds to step 352. If, however, the reason may not be corrected then method 300 proceeds to step 360.

In step 352, provisioning server transmits a message to device 102 indicating the reason that the additional service could not be associated with the associated service and requesting corrected or additional information. Device 102 displays a form allowing the information to be entered and transmits this information to provisioning server 106. Method 300 then returns to step 322. Method 300 may limit the number of times that the user is allowed to provide corrected or additional information for the additional service. If the selected number of attempts is reached, then method 300 may be terminated.

In step 360, provisioning server 106 transmits a message to device 102 indicating the reason that the additional service could not be configured to operate with the associated service and device 102 displays a corresponding message. Method 300 then returns to step 318, to allow the user to stop specifying additional services, or to specify another additional service, which may be provided to the user by another service provider.

In step 370, if the user has configured a primary service and at least one additional service to operate with the associated service, then method 300 proceeds to step 372. If the user has not configured any additional services, then method 300 proceeds to step 380.

In step 372, the device 102 displays a list of all of the primary and additional services that have been integrated with the associated service. As noted above, in this exemplary embodiment, the primary and additional services are e-mail services provided for the user by service provider B and other service providers. The user is permitted to optionally specify one of the integrated primary or additional services to be used as a "Sent From Address". Optionally, the user may be permitted to enter an e-mail address other than those that have been associated with the associated service to the Sent From Address. The Sent From Address may be recorded in device 102 or with the user's associated service account. The use of the Sent From Address is described below. Method 300 then proceeds to step 380.

In step 380, the provisioning server pushes a new service book 220 (Figure 1) to device 102. Service book 220 is similar to service book 210, except that it is preferably not configured to become active automatically when received at device 102. Service book 220 may be executed on device 102 on request by the user. Service book 220 may be used by the user to associate additional services with the associated service. In addition, service book 220 may optionally permit the user to modify or delete the associated account, remove the primary service or additional services from their association with the associated account, transfer the associated account to a different device, or to transfer an associated account from another device to the device 102. Method 300 then ends.

Method 300 allows a user to provision the associated service for device 102 and to associate the associated service with the primary service and to optionally associate the associated service with one or more additional services. In the exemplary embodiment described above, the primary service and the additional services are e-mail services provided by various e-mail service providers. The provisioning server 106 configures the systems operated by each of the e-mail service providers to forward a copy of each e-mail received at the user's various e-mail addresses to the user's associated service account at the associated service provider system 108.

When a forwarded copy of an e-mail is received at the user's associated service account, the associated service provider system 108 prepares a version of the e-mail suitable for display on device 102. This version of the e-mail may be truncated, may exclude some of the header information in the original e-mail, or may otherwise be a modified version of the original e-mail. The modified version of the e-mail is transmitted to device 102, where the user may display it on the device's display.

The user may prepare outgoing e-mails on device 102 using software installed on device 102. An outgoing e-mail may be a reply to or a forwarded version of an e-mail previously received from associated service provider system 108, or they may be new e-mails. If the user has specified a Sent From Address as described above in relation to step 372 of method 300, then the Sent From Address is inserted in "From" field of the e-mail as a default. The user may modify this From address. When the user has completed the e-mail, device 102 transmits it to the associated service provider system 108. Associate service provider system 108 connects with the primary service provider system 114 or one of the additional service provider systems and transmits the e-mail to that system for subsequent transmission to one or more recipients identified by the user. Typically, the associated service provider system will use the from field of the e-mail to determine which of the primary or additional service provider systems to use to transmit the e-mail. If the Sent From Address is not one of the primary or additional services, then the associated service provider system may transmit the e-mail through any one of the primary or additional systems. Alternatively, the associated service provider may always use the primary service provider to transmit the e-mail, and may override the from field of the e-mail to correspond to the specified Sent From Address.

System 100 and method 300 have been described in the context of an e-mail integration system that allows the primary e-mail service and optionally, one or more additional e-mail services, to be accessed and used through device 102. The present invention is equally suited for use with other types of services. For example, the primary and additional services may be calendar services used to maintain appointment records and to-do lists, instant messaging services, WebContent services, PushContent services, Presence services or a variety of other services. The primary and additional services may be contact management services. Furthermore, different types of services may be integrated using the present invention. The primary service and the additional services may be different types of services. For example, the primary service may be an e-mail service and two of the additional services may be a calendar service and a contact manager service. The three services are each associated with the associated service and the associated service provider system allows the three services to be accessed and used through device 102.

In the embodiment of the invention described above, the primary service is described as being obtained prior to the creation of the associated service account for the device 102. The primary service may be obtained even before the user obtains device 102 in step 304. For example, the user may have obtained the primary service many years ago. In step 304, the user may obtain device 102, which is capable of being integrated with the user's existing primary service. The user may then use method 300 to provision the associated service, associate it with the primary service and possibly associate it with additional services.

In another embodiment of the present invention, the user may not have a primary service account prior to obtaining device 102 in step 304. In this second embodiment, the primary service is not provisioned for the user in step 304. Instead, the user simply obtains device 102 and then proceeds to enable its communication system as described in relation to step 306. In step 310, the user is permitted to specify an identity (i.e. an e-mail address) for the primary service. Typically, the domain name (i.e. servrprovB.com) will be predetermined and may be the domain used by the network operator 116 or the associated service provider A for the primary service. The user will typically only be able to specify his or her user name (i.e. the "user" portion of user@servprovB.com). The user will also specify a password. In step 314, the specified user name and password may be used to create both the associated service account (using the specified user name as the user ID for he associated service account) in the associated service provider system 108 and the primary service account in the primary service provider system 114.

Alternatively, in another embodiment of the present invention, in step 310, the user may be permitted to specify a different user ID and password for the associated service account and a different user name and password for the primary service account. Both of these accounts are then created in step 312.

In these embodiments where the primary service account is created in conjunction with the creation of the associated service account, provisioning server 106 may, in step 312, check with primary service provider system 114 whether the primary service will be able to be associated with the associated service, prior to creating either the associated service account or the primary service account. If this may be done, then both accounts are created in step 314. Otherwise an appropriate error message is displayed in step 330 and the method returns to step 310. In this embodiment, the method proceeds directly from step 314 to step 318.

The system and method of the present invention provide a simple and rapid mechanism for a user to create an associated service account (and possibly a primary service account) and to associate the primary service with the associated service. If the user has a primary service before beginning method 300, the user need only obtain device 102 (step 302), activate its communication system (step 304), specify a user ID and password for the associated account (step 310), optionally specify any additional accounts to associate with the associated account (step 318) and optionally select a Sent From Address (step 372). If the user does not already have a primary service, the user is able to also create a primary service account by specifying a user name and password for it in step 310.

The present invention permits the user to provision and configure the associated service account entirely using device 102. According to one contemplated embodiment of the invention, a user is guided through provisioning of the associated service and integration of an existing primary service through a series of prompts and screens presented on the display 152 of the device 102. To begin the associated service provisioning process, after the service book 210 has been received and executed on the device 102, the user selects a "Create New Account" or like function, using an input device 150. In most cases, a license, terms of use, or other type of legal agreement is then presented to the user, and the user selects "Accept" to continue. The user is then prompted for information relating to the associated service, such as a username and password, a friendly name, and a secret question and answer, and selects "Submit", "Done", or a similar function to send the information to the provisioning server 106. After the associated service is provisioned, selection of an "Add Account" or analogous function prompts the user to enter information related to the existing primary service. The user then enters primary service information such as email address, userID and password, and again selects a "Submit", "Done", or similar function to send the primary service information to the provisioning server 106 to integrate the existing primary service with the associated service.

It will be apparent to those of skill in the art that the preceding example is for illustrative purposes, and that the present invention is in no way limited thereto. For example, the step of accepting a license or legal agreement may be waived, or implicit in a user having unwrapped the device, as is common in conjunction with such products as computer software. Also, where the primary service is created in conjunction with the associated service, the provisioning process may be further compacted into just two selections by the user, to first create a new account, and then submit information relating to the associated service.

Steps 318, 370 and 372 permit the user to associate additional services with the associated service. In some embodiments, this may not be appropriate or desirable. For example, the associated service provider may restrict the associated service to be associated with only a primary service. In this case, method 300 may end after step 316, or if the method described above in relation to the second and third embodiments is followed, then after step 314.

In other embodiments, it may appropriate to allow additional services to be associated with the associated service in steps 318, 320 and their related steps, but it may not be appropriate to specify one of the primary or additional services as a "Sent From Account". For example, only one of the primary and additional services may be an e-mail service. In such embodiments, method 300 may end after step 318.

In steps 316 and 322, the primary and associated service are described as being configured to forward e-mail message received by them for the user to the associated service provider system 108. In other embodiments, the associated service provider system 108 may periodically poll the user's primary service and additional service accounts at the primary service provider system 114 and the additional service provider systems to determine if any additional information (i.e. new e-mails) should be copied and transmitted to device 102. The methods of auto-forwarding as described above and polling as described here may be used simultaneously for different primary and additional services.

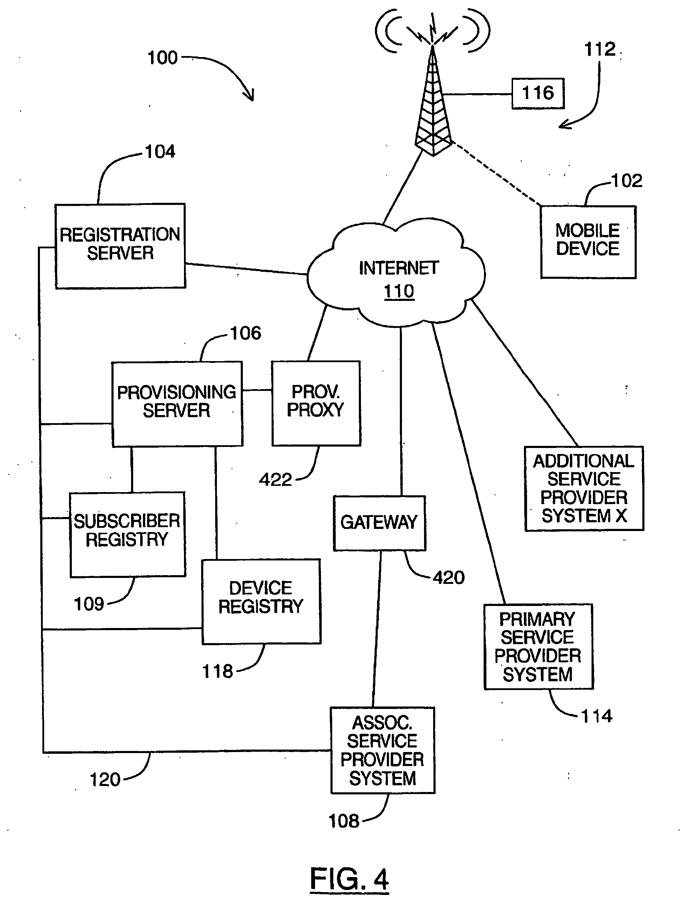

Reference is next made to Figure 4, which illustrates another system 400 that may be used to implement method 300. System 400 is similar to system 100 and identical components are given the same reference numeral as in system 100. System 400 includes a gateway 420 and a provisioning proxy 422.

Gateway 420 operates as an interface between device 102 and provisioning server 106 and associated service provider system 108. Gateway 420 may be an assembly of one or more computer systems that serve to streamline communications between provisioning server 106 and mobile communication devices such as device 102. Similarly, gateway 420 serves to streamline communications between associated service provider system 108 and mobile communication devices.

Provisioning proxy 422 serves as an interface between gateway 420 and provisioning server 106, similarly serving to streamline communications between gateway 420 and provisioning server 106 by, for example, conducting the operation of pushing service books to device 102. Provisioning proxy 422 may also serve to provide secure communication between device 102 and provisioning server 106.

The present invention has been described here by way of example only. Various modification and variations may be made to these exemplary embodiments without departing from the scope of the invention, which is limited only by the appended claims.

## Claims

1. A method of provisioning an associated service for a mobile device (102) comprising the steps of
transmitting a registration request to register a user for said associated service to a registration server (104);
receiving a service book from a provisioning server (106) in response to said registration request, wherein said service book allows information relating to said associated service to be collected at said mobile device (102) and transmitted to said provisioning server (106);
allowing said user to input information using the service book, wherein said information input by said user comprises a user ID and a password;
transmitting said information input by said user to said provisioning server (106), wherein said provisioning server (106) creates an associated service account using said user ID and said password, and wherein said mobile device (102) subsequently obtains said associated service using said associated service account **characterized in that**;
said registration request is transmitted to said registration server (104) automatically upon activation of a communication system of said mobile device (102); and
that said service book becomes active automatically upon receipt of said service book at said mobile device (102), such that user acceptance of said service book at said mobile device (102) is not required to activate said service book.

2. The method as claimed in claim 1, wherein said service book specifies an address of a server containing pages for collecting said information relating to said associated service, and wherein said mobile device (102) displays one or more of said pages to allow said user to input said information.

3. The method as claimed in claim 1, wherein said data related to the device and a user's subscription of network services is also transmitted to said provisioning server (106) at the transmitting step.

4. The method as claimed in claim 1 wherein said associated service forwards information from a primary service to said mobile device, and wherein, in response to the transmission of said user ID and said password to said provisioning server (106), said provisioning server (106) also creates said primary service and configures said associated service to direct information from said primary service to said mobile device (102).

5. The method was claimed in claim 1, having the additional steps: of allowing said user to input information relating to a primary service (114) and transmitting said information relating to said primary service to said provisioning server (106), wherein said provisioning server (106) configures said associated service (102) to direct information from said primary service to said mobile device (102).

6. The method as claimed in claim 4 or claim 5, having the additional steps of allowing said user to input information relating to at least one additional service and transmitting said information relating to said at least one additional service to said provisioning server (106), wherein said provisioning server (106) configures said associated service to direct information from said at least one additional service to said mobile device (102).

## Patentansprüche

1. Verfahren zum Bereitstellen eines zugeordneten Dienstes für eine mobile Vorrichtung (102), umfassend die Schritte:
Übertragen einer Registrierungsanforderung, um einen Benutzer für den zugeordneten Dienst mit einem Registrierungs-Server (104) zu registrieren,
Empfangen eines Dienst-Buches von einem Bereitstellungs-Server (106) in Antwort auf die Registrierungsanforderung, wobei das Dienst-Buch ermöglicht, Informationen betreffend den zugeordneten Dienst an der mobilen Vorrichtung (102) gesammelt und an den Bereitstellungs-Server (106) übertragen zu werden,
Ermöglichen für den Benutzer, Informationen, welche das Dienst-Buch verwenden, einzugeben, wobei die Eingabe von Informationen durch den Benutzer eine Benutzer-ID und ein Passwort umfasst,
Übertragen der Eingabe von Informationen durch den Benutzer an den Bereitstellungs-Server (106), wobei der Bereitstellungs-Server (106) ein zugeordnetes Dienst-Konto, welches die Benutzer-ID und das Passwort verwendet, erzeugt und wobei die mobile Vorrichtung (102) nachfolgend den zugeordneten Dienst, welcher das zugeordneter Benutzer-Konto verwendet, erhält, **dadurch gekennzeichnet, dass**
die Registrierungsanforderung an den Registrierungs-Server (104) nach Aktivierung eines Kommunikationssystems der mobilen Vorrichtung (102) automatisch übertragen wird, und
dass das Dienst-Buch nach Empfang des Dienst-Buches an der mobilen Vorrichtung (102) automatisch aktiv wird, derart, dass eine Benutzer-Akzeptanz des Dienst-Buches an der mobilen Vorrichtung (102) nicht erforderlich ist, um das Dienst-Buch zu aktivieren.

2. Verfahren nach Anspruch 1, wobei das Dienst-Buch eine Adresse eines Servers, der Seiten zum Sammeln der Informationen betreffend den zugeordneten Dienst umfasst, spezifiziert und wobei die mobile Vorrichtung (102) eine oder mehrere der Seiten anzeigt, um dem Benutzer zu ermöglichen, die Informationen einzugeben.

3. Verfahren nach Anspruch 1, wobei die Daten betreffend die Vorrichtung und ein Abonnement von Netz-Diensten des Benutzers in dem Schritt zum Übertragen auch an den Bereitstellungs-Server (106) übertragen werden.

4. Verfahren nach Anspruch 1, wobei der zugeordnete Dienst Informationen von einem Haupt-Dienst an die mobile Vorrichtung weiterleitet und wobei, in Antwort auf die Übertragung der Benutzer-ID und des Passwortes an den Bereitstellungs-Server (106), der Bereitstellungs-Server (106) auch den Haupt-Dienst erzeugt und den zugeordneten Dienst konfiguriert, um Informationen von dem Haupt-Dienst an die mobile Vorrichtung (102) zu richten.

5. Verfahren nach Anspruch 1, die zusätzlichen Schritte aufweisend: Ermöglichen für den Benutzer, Informationen betreffend einen Haupt-Dienst (114) einzugeben, und Übertragen der Informationen betreffend den Haupt-Dienst an den Bereitstellungs-Server (106), wobei der Bereitstellungs-Server (106) den zugeordneten Dienst (102) konfiguriert, um Informationen von dem Haupt-Dienst an die mobile Vorrichtung (102) zu richten.

6. Verfahren nach Anspruch 4 oder 5, die zusätzlichen Schritte aufweisend: Ermöglichen für den Benutzer, Informationen betreffend wenigstens einen zusätzlichen Dienst einzugeben, und Übertragen der Informationen betreffend den wenigstens einen zusätzlichen Dienst an den Bereitstellungs-Server (106), wobei der Bereitstellungs-Server (106) den zugeordneten Dienst konfiguriert, um Informationen von dem wenigstens einen zusätzlichen Dienst an die mobile Vorrichtung (102) zu richten.

## Revendications

1. Procédé d'approvisionnement d'un service associé pour un dispositif mobile (102), comprenant les étapes suivantes :
émettre vers un serveur d'enregistrement (104) une demande d'enregistrement pour enregistrer un utilisateur pour ledit service associé;
recevoir d'un serveur d'approvisionnement (106) un registre de service, en réponse à la demande d'enregistrement, ledit registre de service permettant de collecter au dispositif mobile (102) de l'information concernant le service associé, et de l'émettre vers le serveur d'approvisionnement (106);
permettre à l'utilisateur d'introduire de l'information en utilisant le registre de service, l'information introduite par l'utilisateur comprenant un identificateur (ID) d'utilisateur et un mot de passe;
émettre vers le serveur d'approvisionnement (106) l'information introduite par l'utilisateur, ledit serveur d'approvisionnement (106) créant un compte de service associé en utilisant l'identificateur d'utilisateur et le mot de passe, et le dispositif mobile (102) obtenant ensuite le service associé en utilisant le compte de service associé, **caractérisé en ce que** :
la demande d'enregistrement est émise automatiquement vers le serveur d'enregistrement (104) sous l'effet de l'activation d'un système de communication du dispositif mobile (102); et
le registre de service devient automatiquement actif lorsque ce registre de service est reçu au dispositif mobile (102), de façon que l'acceptation du registre de service par l'utilisateur au dispositif mobile (102) ne soit pas exigée pour activer le registre de service.

2. Procédé selon la revendication 1, dans lequel le registre de service spécifie une adresse d'un serveur contenant des pages pour collecter ladite information concernant le service associé, et dans lequel le dispositif mobile (102) visualise une ou plusieurs desdites pages pour permettre à l'utilisateur d'introduire ladite information.

3. Procédé selon la revendication 1, dans lequel les données concernant le dispositif et un abonnement de l'utilisateur à des services de réseau sont également émis vers le serveur d'approvisionnement (106) à l'étape d'émission.

4. Procédé selon la revendication 1, dans lequel le service associé transmet de l'information à partir d'un service principal vers le dispositif mobile, et dans lequel en réponse à l'émission de l'identificateur d'utilisateur et du mot de passe vers le serveur d'approvisionnement (106), le serveur d'approvisionnement (106) crée également le service principal et configure le service associé pour diriger de l'information à partir du service principal vers le dispositif mobile (102).

5. Procédé selon la revendication 1, ayant les étapes supplémentaires consistant à permettre à l'utilisateur d'introduire de l'information concernant un service principal (114) et à émettre vers le serveur d'approvisionnement (106) ladite information concernant le service principal, dans lequel le serveur d'approvisionnement (106) configure le service associé (102) pour diriger de l'information à partir du service principal vers le dispositif mobile (102).

6. Procédé selon la revendication 4 ou la revendication 5, ayant les étapes supplémentaires consistant à permettre à l'utilisateur d'introduire de l'information concernant au moins un service supplémentaire et à émettre vers le serveur d'approvisionnement (106) ladite information concernant l'au moins un service supplémentaire, dans lequel le serveur d'approvisionnement (106) configure le service associé pour diriger de l'information à partir de l'au moins un service supplémentaire vers le dispositif mobile (102).
